(19) Europäisches Patentamt
European Patent Office
Office européen des brevets

(11) **EP 1 732 794 B1**

(12) **FASCICULE DE BREVET EUROPEEN**

(45) Date de publication et mention
de la délivrance du brevet:
**17.06.2009 Bulletin 2009/25**

(21) Numéro de dépôt: **05749302.5**

(22) Date de dépôt: **04.04.2005**

(51) Int Cl.:
***B60T 7/12*** *(2006.01)*

(86) Numéro de dépôt international:
**PCT/FR2005/000808**

(87) Numéro de publication internationale:
**WO 2005/100109 (27.10.2005 Gazette 2005/43)**

(54) **PROCEDE D'ASSISTANCE A LA CONDUITE EN DESCENTE ET DISPOSITIF ASSOCIE**

ABWÄRTSFAHRHILFEVERFAHREN UND ENTSPRECHENDE VORRICHTUNG

DOWNHILL DRIVING ASSISTANCE METHOD AND ASSOCIATED DEVICE

(84) Etats contractants désignés:
**AT BE BG CH CY CZ DE DK EE ES FI FR GB GR HU IE IS IT LI LT LU MC NL PL PT RO SE SI SK TR**

(30) Priorité: **05.04.2004 EP 04290893**

(43) Date de publication de la demande:
**20.12.2006 Bulletin 2006/51**

(73) Titulaire: **Delphi Technologies, Inc.**
**Troy, MI 48007 (US)**

(72) Inventeurs:
• **ALVAREZ, Belen**
**F-75015 Paris (FR)**
• **GROULT, Xavier**
**F-95470 Survilliers (FR)**

(74) Mandataire: **Denton, Michael John**
**Delphi France SAS**
**64 Avenue de la Plaine de France**
**ZAC Paris Nord II**
**B.P. 65059, Tremblay en France**
**95972 Roissy Charles de Gaulle Cedex (FR)**

(56) Documents cités:
**EP-A- 1 101 676          WO-A-01/14185**
**US-A1- 2002 041 167      US-B1- 6 692 090**
**US-B1- 6 701 224**

EP 1 732 794 B1

**EP 1 732 794 B1**

**Description**

La présente invention est relative à l'assistance à la conduite d'un véhicule. Plus particulièrement, l'invention est relative à un procédé et un dispositif d'assistance à la conduite lors de la descente d'une pente sur laquelle le véhicule est engagé.

Un conducteur ayant immobilisé son véhicule sur une pente peut avoir des difficultés à le faire redémarrer. Le démarrage est une opération rendue plus difficile à réaliser lorsque le véhicule comporte une boîte de vitesses manuelle.

Dans un premier cas de figure, le conducteur cherche à démarrer son véhicule pour monter la pente. Le conducteur doit embrayer et accélérer de manière à ne pas caler, tout en relâchant progressivement le frein à main lorsque celui-ci a été utilisé. Le démarrage en côte est d'autant plus délicat à réaliser que la pente est importante.

Dans un deuxième cas, le conducteur cherche à démarrer son véhicule pour descendre la pente. Le conducteur utilise l'inertie du véhicule pour descendre la pente en relâchant progressivement les freins. Eventuellement, le moteur est utilisé comme frein par un actionnement dosé de la pédale d'embrayage, une vitesse ayant été passée.

Dans le cas particulier où la descente de la pente se fait à reculons, c'est-à-dire lorsque l'avant du véhicule est orienté vers le haut de la pente, le conducteur doit, en plus, se tourner vers l'arrière pour regarder la route tout en tournant le volant de direction. Si la pente de la route est importante, le conducteur est dans une position ne lui permettant pas de voir la route à suivre. Cette situation se présente souvent lors de la conduite d'un véhicule tout terrain sur une pente ayant une forte inclinaison.

Le document US 5 941 614 décrit une fonction d'assistance à la conduite en descente qu'elle que soit l'orientation du véhicule dans la pente et que le véhicule soit initialement à l'arrêt ou qu'il possède une certaine vitesse. Dans ce document, la fonction d'assistance est activée par le conducteur en appuyant sur un bouton. Le véhicule comporte des capteurs de vitesse de roue permettant de calculer la vitesse instantanée du véhicule. Par ailleurs, le système de freinage est un système entièrement hydraulique couplé à la pédale de frein actionnée par le conducteur.

Lors de l'appel à la fonction d'assistance, à condition que la boîte de vitesses se trouve sur la première vitesse ou sur la marche arrière, une force de freinage est appliquée de manière à réguler la vitesse instantanée du véhicule pour qu'elle atteigne une vitesse seuil de l'ordre de 10 kmh$^{-1}$. Plus précisément, le couple de freinage demandé par la fonction d'aide est une fonction de la différence entre la vitesse instantanée du véhicule et la vitesse seuil.

Dans ce document, l'utilisation d'un accéléromètre est envisagée, en conjonction avec l'accélération instantanée calculée à partir de la vitesse instantanée, pour déterminer l'angle de la pente. Cette information permet de changer la valeur de la vitesse seuil.

Le système décrit est complexe puisqu'il comporte un ensemble de vannes et de circuits hydrauliques permettant de gérer la pression à l'origine du couple de freinage.

De plus, selon cette méthode, on laisse le véhicule prendre de la vitesse le long de la pente avant d'appliquer un couple de freinage apte à aligner la vitesse instantanée avec la vitesse seuil. En conséquence, la vitesse instantanée peut dépasser la vitesse seuil avant d'être réduite pour passer alors en dessous de la valeur de la vitesse seuil. Ces oscillations de la vitesse sont ressenties par le conducteur. Au delà du manque de confort, le conducteur a l'impression que le véhicule est entraîné dans la pente avec une trop grande vitesse et a tendance à appuyer sur la pédale de frein. Ceci a pour conséquence de sortir de la fonction d'assistance.

Le document WO 01/14185 A1 propose d'améliorer la fonction du document précédent en ajoutant un couple supplémentaire, dépendant de la pente, au couple de base déterminé comme dans le document précédent, si certaines conditions sont vérifiées. Si initialement le véhicule est à l'arrêt et les conditions sont vérifiées, le couple de base est faible pour permettre au véhicule de prendre de la vitesse, car, à cet instant, la vitesse instantanée mesurée est nettement en dessous de la vitesse seuil. De plus le couple supplémentaire qui déterminé en fonction d'une pression avant l'augmentation de la pression courante est indéfini à l'instant initial. Ainsi, le problème des oscillations de vitesse n'est pas résolu de manière satisfaisante pour un véhicule initialement à l'arrêt.

Dans les véhicules récents, il est possible de prendre la main sur le système de freinage à la place du conducteur en appliquant un couple de freinage sur les roues sans intervention du conducteur. L'actionnement de la pédale de frein par le conducteur est découplé de l'application effective d'un couple de freinage sur l'une des roues du véhicule. Ces systèmes de freinage comportent soit des étriers hydrauliques soit des étriers électromécaniques, soit encore des étriers hydrauliques à l'avant et des étriers électromécaniques à l'arrière (système de freinage hybride).

L'invention a pour but de proposer un procédé et un dispositif améliorés d'assistance à la conduite pour la descente d'une pente ne présentant pas au moins certains des inconvénients précédemment cités.

L'invention a pour objet un procédé d'assistance à la conduite d'un véhicule engagé sur une pente, ledit véhicule comportant :

- un système de freinage découplé de l'actionnement d'une pédale de frein par le conducteur du véhicule et apte à appliquer un couple de freinage sur au moins une roue dudit véhicule ;
- au moins un capteur de vitesse de roue apte à mesurer une vitesse instantanée d'une roue dudit véhicule ;

le procédé comportant les étapes consistant à :

- déterminer la valeur instantanée de la pente sur laquelle se trouve ledit véhicule ;
- tester l'existence initiale simultanée de conditions initiales comportant au moins une condition d'entrée ; et, une fois que lesdites conditions initiales sont toutes vérifiées et tant qu'au moins une condition de sortie n'est pas vérifiée, réaliser des itérations successives d'une boucle principale de détermination d'un couple de freinage cible consistant à :

  ○ définir une vitesse souhaitable devant être atteinte par le véhicule ;
  ○ déterminer ledit couple de freinage cible en fonction d'un écart entre la valeur instantanée de ladite vitesse souhaitable et la valeur instantanée d'une vitesse calculée, calculée à partir des mesures effectuées par ledit au moins un capteur de roue ; et,
  ○ émettre un signal correspondant à la valeur dudit couple de freinage cible en direction d'un système de régulation du freinage appartenant au système de freinage ;

**caractérisé en ce que** lesdites conditions initiales comportent une condition d'entrée vérifiée lorsque le véhicule est à l'arrêt et en ce qu'à partir du moment où lesdites conditions initiales sont toutes vérifiées et jusqu'à ce qu'une condition de sortie de procédure initiale soit vérifiée, ledit couple de freinage cible est déterminé selon une procédure initiale de relâchement progressif des freins comprenant l'étape consistant à faire diminuer temporellement ledit couple de freinage cible depuis une valeur initiale d'arrêt, ladite condition de sortie de procédure initiale dépendant d'une comparaison entre ledit couple de freinage cible et un couple de freinage théorique qui est une fonction de la valeur de la pente.

De préférence, ladite procédure initiale comprend les étapes consistant à :

- diminuer ledit couple de freinage cible jusqu'à ce que ladite vitesse calculée soit supérieure à un seuil de vitesse prédéterminé,
- augmenter ledit couple de freinage cible, jusqu'à ce que ladite condition de sortie de procédure initiale soit vérifiée, ladite condition de sortie de procédure initiale étant vérifiée lorsque ledit couple de freinage cible est supérieur audit couple de freinage théorique.

Grâce à ces caractéristiques, on assure que le véhicule commence à se déplacer pendant la procédure initiale sous l'effet de son poids. Comme le relâchement est progressif, cette mise en mouvement est progressive. Pour que cette mise en mouvement reste bien maîtrisée, on fixe le seuil de vitesse très bas de préférence, c'est-à-dire au niveau au niveau de ladite vitesse souhaitable ou en dessous. Selon un mode de réalisation particulier, le seuil de vitesse est un seuil de détection destinée à détecter le premier déplacement du véhicule. Pour cela, le seuil de vitesse est placé juste au dessus de la marge d'erreur des capteurs de vitesse de roue.

Avantageusement, ledit couple de freinage théorique est sensiblement égale au couple à appliquer sur ladite au moins une roue du véhicule pour maintenir la vitesse du véhicule constante.

Cette valeur est nécessairement supérieur à la valeur de couple de freinage qui autorise le véhicule à se mettre en mouvement à partir d'un arrêt total. Pour assurer une transition douce entre la procédure initiale de relâchement et la boucle principale, le couple de freinage théorique est réglé de préférence de manière à juste maintenir le véhicule à vitesse constante sur la pente considérée, c'est-à-dire à compenser l'accélération due au poids du véhicule sans réimmobiliser brutalement ce dernier. Ainsi, on assure que le véhicule n'est pas soumis à une forte accélération lors de la transition précitée. La boucle principale est de préférence effectuée de manière à éviter également les fortes accélérations. Pour cela, la détermination du couple de freinage cible lors d'une itération prend en compte, de préférence, la valeur du couple de freinage cible à l'itération précédente.

Selon un mode de réalisation particulier, l'étape de diminution du couple de freinage cible est d'abord effectuée selon un premier taux de variation temporelle jusqu'à ce que ledit couple de freinage cible soit inférieur audit couple de freinage théorique, puis selon un deuxième taux de variation temporelle jusqu'à ce que ladite vitesse calculée soit supérieure à un seuil de vitesse prédéterminé, ledit premier taux de variation temporelle étant supérieur audit deuxième taux de variation temporelle.

Grâce à ces caractéristiques, la mise en mouvement du véhicule est encore mieux maîtrisée, notamment dans le cas où la pente est très forte. En d'autres termes, une prise de vitesse rapide est empêchée.

De préférence, l'étape d'augmentation du couple de freinage cible est effectuée selon un troisième taux de variation temporelle.

Selon un mode de réalisation particulier, lorsque lesdites conditions initiales sont toutes vérifiées, le procédé comporte ladite procédure initiale de relâchement progressif des freins exécutée en parallèle de ladite boucle principale, ladite condition de sortie de procédure initiale étant vérifiée dès que le couple de freinage cible déterminé par ladite boucle principale est supérieur au couple de freinage cible déterminé par ladite procédure initiale.

L'invention a également pour objet un procédé d'assistance à la conduite d'un véhicule engagé sur une pente, le véhicule comportant un système de freinage découplé de l'actionnement d'une pédale de frein par le conducteur du véhicule et apte à appliquer un couple de freinage sur au moins une roue dudit véhicule ; au moins un capteur de vitesse de roue apte à mesurer une vitesse instantanée d'une roue du véhicule ; un accéléromètre apte à mesurer une accélération longitudinale de la caisse du véhicule en tant qu'accélération longitudinale mesurée, **caractérisé en ce qu'**il comporte les étapes consistant à :

- déterminer la valeur instantanée de la pente sur laquelle se trouve le véhicule en calculant une accélération longitudinale instantanée à partir des mesures de vitesse de roue faite par le au moins un capteur de vitesse de roue ; en déterminant une pente par comparaison de l'accélération longitudinale instantanée avec l'accélération longitudinale mesurée par l'accéléromètre ; et
- tester l'existence initiale simultanée de conditions initiales comportant au moins une condition d'entrée ; et, une fois que lesdites conditions initiales sont toutes vérifiées et tant qu'au moins une condition de sortie n'est pas vérifiée, réaliser des itérations successives d'une boucle principale de détermination d'un couple de freinage cible consistant à déterminer un couple de freinage théorique en fonction de la valeur instantanée de la pente pour que le véhicule atteigne une vitesse souhaitable ; corriger la valeur du couple de freinage théorique pour obtenir un couple de freinage cible ; et, émettre un signal correspondant à la valeur du couple de freinage cible en direction d'un système de régulation du freinage appartenant au système de freinage.

De préférence, le procédé comporte une étape consistant, à chaque itération de la boucle principale, à déterminer la vitesse de descente souhaitable en fonction de la valeur instantanée de la pente déterminée.

De préférence, le véhicule comporte une pédale d'accélération et un capteur d'accélération apte à mesurer le degré d'enfoncement de la pédale d'accélération par le conducteur, et, à chaque itération, la vitesse souhaitable est déterminée en fonction de la valeur instantanée du degré d'enfoncement de la pédale, à condition que la valeur instantanée du degré d'enfoncement de la pédale d'accélération soit comprise dans une plage limitée inférieurement par un premier degré prédéterminé d'enfoncement de la pédale d'accélération et supérieurement par un deuxième degré prédéterminé d'enfoncement de la pédale d'accélération.

Avantageusement, à chaque itération, ladite vitesse souhaitable est augmentée d'une valeur prédéterminée par rapport à la vitesse souhaitable déterminée à l'itération précédente, à condition que ladite valeur instantanée du degré d'enfoncement de la pédale d'accélération soit comprise dans ladite plage.

Selon un mode de réalisation particulier, ledit véhicule comprend une pédale d'embrayage et un capteur de déplacement de la pédale d'embrayage, et ladite étape consistant à déterminer ladite vitesse souhaitable comprend l'étape qui consiste à ajouter une valeur déterminée lorsque ledit capteur de déplacement de la pédale d'embrayage indique que ladite pédale d'embrayage est relâchée.

Grâce à ces caractéristiques, le conducteur peut commander facilement la vitesse à laquelle le véhicule descend la pente.

De préférence, le couple de freinage théorique est déterminé à partir d'un tableau de calibration donnant la valeur du couple de freinage en fonction de la pente déterminée.

De préférence encore, le tableau de calibration est un tableau de calibration sélectionné parmi une pluralité de tableaux de calibration indexés par une valeur de vitesse, la pluralité de tableau étant stockée dans l'espace mémoire, et le tableau de calibration sélectionné est celui dont l'index correspond à ladite vitesse souhaitable.

De préférence une condition d'entrée consiste à comparer une valeur instantanée d'une vitesse du véhicule, calculée à partir des mesures effectuées par le au moins un capteur de roue, par rapport à une vitesse seuil basse prédéterminée, la condition d'entrée étant vérifiée lorsque la valeur instantanée de la vitesse est inférieure à la vitesse seuil basse.

De préférence, lorsque les conditions initiales, comportant au moins la comparaison de la vitesse instantanée du véhicule à la vitesse seuil basse, sont toutes vérifiées, le procédé comporte une procédure initiale de relâchement progressif des freins exécutée en parallèle de la boucle principale, l'exécution de la procédure initiale étant stoppée dès que le couple de freinage cible déterminé par la boucle principale est supérieur au couple requis par la procédure initiale.

De préférence, une condition d'entrée consiste à comparer une valeur instantanée de la pente par rapport à une première pente seuil prédéterminée, la condition d'entrée étant vérifiée lorsque la valeur instantanée de la pente est supérieure à la première pente seuil.

De préférence, le véhicule comporte une boîte de vitesse manuelle et un capteur apte à détecter une position courante du levier de vitesse, et une condition d'entrée consiste à tester la valeur instantanée de la position du levier de vitesse, la condition d'entrée étant vérifiée lorsque la valeur instantanée de la position du levier de vitesse correspond à la marche arrière.

De préférence, le véhicule comporte une pédale d'accélération et un capteur d'accélération apte à mesurer le degré d'enfoncement de la pédale d'accélération, et une condition d'entrée consiste à comparer la valeur instantanée du degré d'enfoncement de la pédale d'accélération par rapport à un premier degré d'enfoncement prédéterminé, la condition d'entrée étant vérifiée lorsque la valeur initiale dudit degré d'enfoncement est inférieure audit premier degré d'enfoncement.

De préférence, une condition de sortie consiste à comparer une valeur instantanée de la pente par rapport à une deuxième pente prédéterminée, la condition de sortie étant vérifiée lorsque la valeur instantanée de la pente est inférieure à la deuxième pente prédéterminée.

De préférence, une condition de sortie consiste à comparer une vitesse instantanée, calculée à partir des mesures effectuées par le au moins un capteur de vitesse de roue, par rapport à une vitesse seuil haute, la condition de sortie étant vérifiée lorsque la vitesse instantanée est supérieure à une vitesse seuil haute.

De préférence, la condition de sortie consiste à comparer un couple de freinage demandé, calculé à partir du degré d'enfoncement d'une pédale de frein, par rapport au couple de freinage cible, la condition de sortie étant vérifiée lorsque le couple de freinage demandé est supérieur audit couple de freinage cible.

De préférence, la correction de la valeur du couple de freinage théorique pour obtenir un couple de freinage cible est fonction d'un écart entre la valeur instantanée de la vitesse souhaitable et la valeur instantanée de la vitesse calculée.

De préférence, la correction consiste à soustraire un couple de freinage de correction du couple de freinage théorique.

Selon un mode de réalisation particulier, ledit véhicule comprend un accéléromètre apte à mesurer une accélération longitudinale de la caisse dudit véhicule en tant qu'accélération longitudinale mesurée, ladite valeur instantanée de la pente étant déterminée en :

○ calculant une accélération longitudinale instantanée à partir des mesures de vitesse de roue faite par ledit au moins un capteur de vitesse de roue ;
○ déterminant une pente par comparaison de ladite accélération longitudinale instantanée avec ladite accélération longitudinale mesurée par ledit accéléromètre.

L'invention a également pour objet une unité de calcul programmable comportant un processeur et au moins un espace mémoire, l'espace mémoire comporte des codes d'instruction d'un programme d'assistance à la conduite d'un véhicule engagé sur une pente, **caractérisé en ce que** ledit programme d'assistance à la conduite met en oeuvre le procédé d'assistance à la conduite décrit ci-dessus.

L'invention a également pour objet un dispositif d'assistance à la conduite d'un véhicule engagé sur une pente, comportant un système de freinage découplé de l'actionnement par le conducteur d'une pédale de frein ; au moins un capteur de vitesse de roue apte à mesurer la vitesse instantanée d'une roue du véhicule ; un accéléromètre apte à mesurer une accélération longitudinale de la caisse du véhicule en tant qu'accélération longitudinale mesurée et une unité de calcul programmable ; le dispositif étant **caractérisé en ce que** l'unité de calcul programmable est telle que décrite ci-dessus.

L'invention a également pour objet un véhicule **caractérisé en ce qu'**il comporte un dispositif d'assistance à la conduite tel que décrit ci-dessus.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :

- la figure 1 est une représentation schématique du dispositif, embarqué dans un véhicule, mettant en oeuvre le procédé d'assistance à la conduite selon l'invention ;
- la figure 2 est un schéma blocs représentant les différentes étapes permettant la détermination de la valeur instantanée de la pente ;
- la figure 3, réunion des figures 3a et 3b, est un schéma blocs d'un premier mode de réalisation du procédé d'assistance à la conduite selon l'invention ;
- la figure 4 est un graphe illustrant différents paramètres cinématique d'un véhicule équipé du dispositif d'assistance à la conduite de la figure 1 engagé sur une pente constante ;
- la figure 5 est un graphe illustrant différents paramètres cinématique d'un véhicule équipé du dispositif d'assistance engagé sur une pente variable ; et,
- la figure 6, réunion des figures 6a et 6b, est un schéma blocs d'un deuxième mode de réalisation du procédé d'assistance à la conduite selon l'invention.

Dans ce qui suit, l'orientation du véhicule le long de la pente est telle que la descente s'effectue en marche arrière, c'est-à-dire que l'arrière du véhicule est dirigé vers le bas de la pente, ou encore que l'avant du véhicule est dirigé vers le haut de la pente. La pente en un point de la route est définie par un angle p avec l'horizontale.

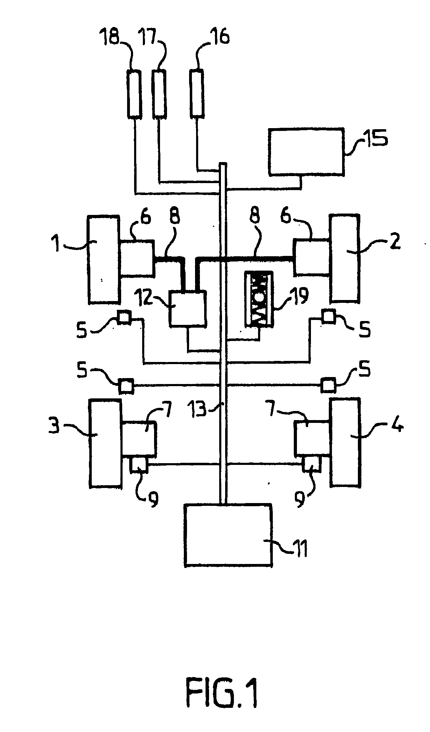

En se référant à la figure 1, le véhicule comporte quatre roues, deux roues avant 1 et 2 et deux roues arrière 3 et 4. Chacune des roues est équipée d'un capteur de vitesse de roue 5 apte à mesurer la vitesse instantanée de rotation de la roue à proximité de laquelle il est situé.

Dans le mode de réalisation actuellement préféré, le système de freinage du véhicule est un système de freinage hybride : les roues avant 1 et 2 sont respectivement équipées de freins hydrauliques 6 reliés à un actionneur hydraulique 12 via des connexions hydrauliques 8 ; les roues arrière 3 et 4 sont respectivement équipées de freins électromécaniques 7 équipés d'actionneurs électromécaniques 9.

Le dispositif d'assistance à la conduite comporte également, dans le mode de réalisation de la figure 1, un capteur de déplacement ou de degré d'enfoncement de la pédale de frein 16, un capteur de déplacement ou de degré d'enfoncement de la pédale d'accélération 17, un capteur de déplacement de la pédale d'embrayage 18 (ou un équivalent comme un interrupteur sur la pédale d'embrayage indiquant le point de patinage) et un capteur de position du levier de la boîte de vitesses 15.

Le véhicule comporte un capteur d'accélération longitudinal 19 d'un type comportant une masse suspendue de manière élastique. Le capteur 19 est apte à émettre un signal correspondant à la valeur instantanée d'une accélération longitudinale mesurée $A_m$ du véhicule.

L'ensemble des capteurs décrits ci-dessus ainsi que les actionneurs hydrauliques 12 et électromécaniques 9 communiquent avec une unité de calcul 11, embarquée, au travers d'un bus de communications 13. Le bus de communications 13 peut, par exemple, supporter le protocole CAN-Bus.

L'unité de calcul 11 possède toutes les caractéristiques électroniques et logicielles d'un ordinateur. En particulier, l'unité de calcul 11 comporte un processeur apte à exécuter des instructions en temps réel et un espace mémoire dans lequel sont mémorisées différentes séries d'instructions formant des programmes exécutables. L'unité de calcul 11 comporte également des interfaces entrée/sortie nécessaires à la communication avec les autres éléments du dispositif. Ces interfaces sont aptes à recevoir et écrire dans l'espace mémoire des données entrantes, telles que des mesures effectuées par les capteurs, et à lire dans l'espace mémoire et à émettre des données sortantes en direction des actionneurs.

L'unité de calcul 11a plus particulièrement pour fonction de commander les étriers de frein. L'unité de calcul 11 exécute par exemple un programme de contrôle du comportement du véhicule, tels que ABS (contrôle anti-blocage), ESP (contrôle de stabilité) ou TCS (contrôle anti-patinage). L'unité de calcul 11 programmable est en particulier apte à exécuter les codes d'instructions d'un programme d'assistance à la conduite d'un véhicule engagé sur une pente pour la mise en oeuvre du procédé selon l'invention.

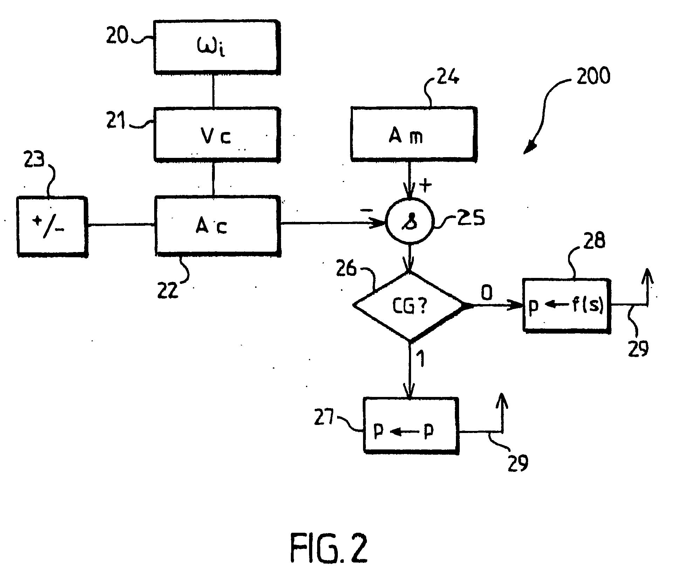

En référence à la figure 2, un procédé 200 est décrit permettant d'estimer la valeur instantanée de la pente. Ce procédé élémentaire de détermination de la pente constitue une étape du procédé d'assistance à la conduite selon l'invention.

A l'étape 20, on effectue l'acquisition des vitesses $\omega_i$ de rotation de chacune des roues mesurées par les différents capteurs 5.

A l'étape 21, une vitesse $V_c$ correspondant à la vitesse instantanée du véhicule est calculée à l'aide des vitesses des roues $\omega_i$. Pour obtenir cette vitesse calculée $V_c$, différents procédés classiques bien connus de l'homme du métier sont utilisables.

A l'étape 22, une accélération longitudinale calculée $A_c$ correspondant à une accélération instantanée du véhicule est calculée par dérivation temporelle de la vitesse calculée $V_c$. Lorsque les capteurs de vitesse de roue 5 sont des capteurs non signés, l'information qu'ils délivrent est en fait la valeur absolue de la vitesse de roue $\omega_i$. Dans ce cas, la vitesse calculée $V_c$, calculée à l'étape 21, et l'accélération longitudinale calculée $A_c$, calculée à l'étape 22, sont des valeurs absolues. Une étape 23 est alors prévue pour déterminer le signe qu'il faut affecter à l'accélération longitudinale calculée $A_c$ en fonction du rapport de la boîte de vitesses sélectionné. Cette information est donnée par le capteur 15 donnant la position du levier de vitesse ainsi que par le capteur de position de la pédale d'embrayage 18 qui permet de savoir si la vitesse est embrayée.

A l'étape 23, si la marche arrière est engagée et que la pédale d'embrayage est relevée, on affecte le signe - à l'accélération longitudinale calculée $A_c$. Si la marche avant est engagée et que la pédale d'embrayage est relevée, on affecte le signe + à l'accélération longitudinale calculée $A_c$. Si la boîte de vitesses est au neutre ou que la pédale d'embrayage est enfoncée, il se présente deux cas : soit le véhicule était en mouvement à l'instant précédent, auquel cas on conserve le signe correspondant au dernier rapport qui a été engagé ; soit le véhicule était à l'arrêt à l'instant précédent, auquel cas on utilise le capteur d'accélération ou accéléromètre 19 pour déterminer dans quel sens le véhicule est en train de démarrer.

En variante, si les capteurs de vitesse de roue 5 sont des capteurs signés, l'étape 23 est supprimée. Dans les deux réalisations, on obtient une accélération longitudinale calculée $A_c$ qui a une valeur algébrique dont le signe correspond au sens de déplacement du véhicule.

A l'étape 24, la valeur instantanée de l'accélération longitudinale mesurée par le capteur d'accélération 19 est acquise en tant qu'accélération longitudinale mesurée $A_m$. Cette mesure $A_m$ est algébrique.

A l'étape 25, un signal de différence s est calculé : $s = A_m - A_c$.

A l'étape 26, une condition logique de gel des mesures de pente CG est éprouvée. Dans l'exemple représenté, la condition CG est une variable booléenne prenant la valeur 0 lorsqu'elle est non vérifiée et 1 lorsqu'elle est vérifiée. Pour éprouver la condition CG, on calcule la dérivée temporelle du signal de différence s : $D = ds/dt$. Pour cela, de nombreuses méthodes de dérivation d'un signal échantillonné sont disponibles. La condition CG est :

$$CG = [|V_c| < S_1 \text{ ou } (|V_c| \leq S_3 \text{ et } |D| > S_2)].$$

$S_1$ et $S_3$ sont des seuils de vitesse positifs prédéterminés. Par exemple, $S_1 = 1,5$ km/h et $S_3 = 5$ km/h. $S_2$ est un seuil de stabilité positif fixé qui peut être déterminé à la suite d'essais.

En variante, lorsque le véhicule est en mouvement, le taux de variation D peut être calculé en tant que variation spatiale de la variable de différence s : $D = (ds/dt)/V$.

Si la condition de gel CG n'est pas vérifiée, l'étape 28 est effectuée. Une variable d'estimation de pente p est actualisée en fonction de la valeur actuelle du signal de différence s : $p = \tan[\text{Arcsin}(s/g)]$, où g est le module de l'accélération de la gravitation.

Au contraire, si la condition de gel CG est vérifiée, l'étape 27 est effectuée. La valeur de l'estimation de pente obtenue à l'itération précédente est conservée en tant que valeur actuelle de la pente.

Après l'étape 27 ou 28, la flèche 29 indique le retour à l'étape 20 pour une nouvelle itération du procédé d'estimation de la pente p.

La pente estimée p est une estimation précise de la pente tout au long d'une manoeuvre. Même si le gel momentané de la mesure de la pente entraîne une erreur de l'estimation, la pente estimée p peut, de manière fiable, servir à calculer différentes variables de contrôle. En particulier elle est utilisée par l'unité de calcul 11 pour fournir une assistance à la conduite pour la descente d'une route en pente.

Bien entendu, la pente p peut être estimée par d'autres procédés que celui décrit en référence à la figure 2.

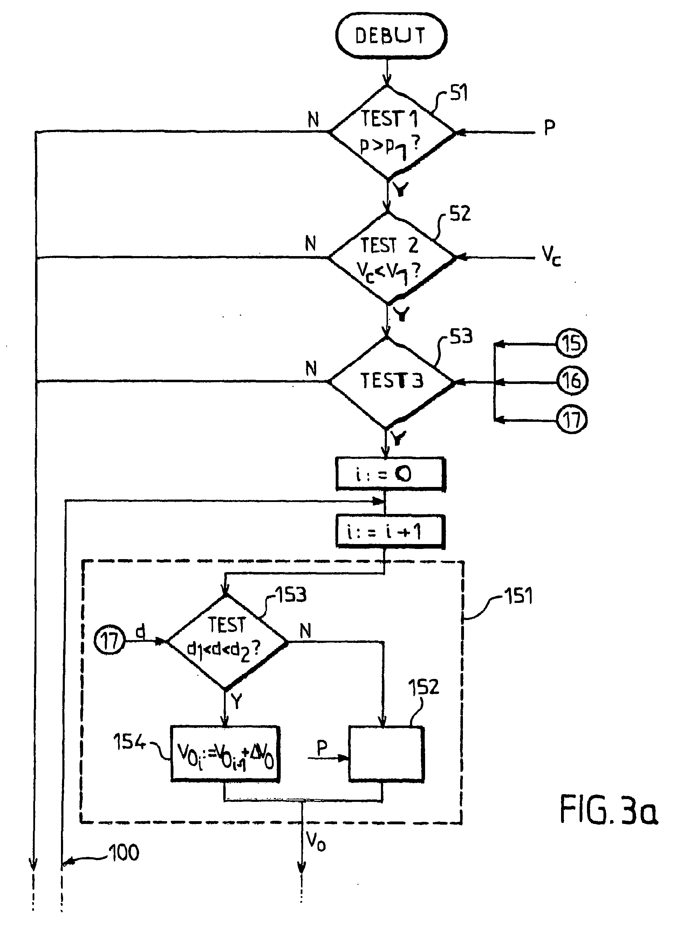

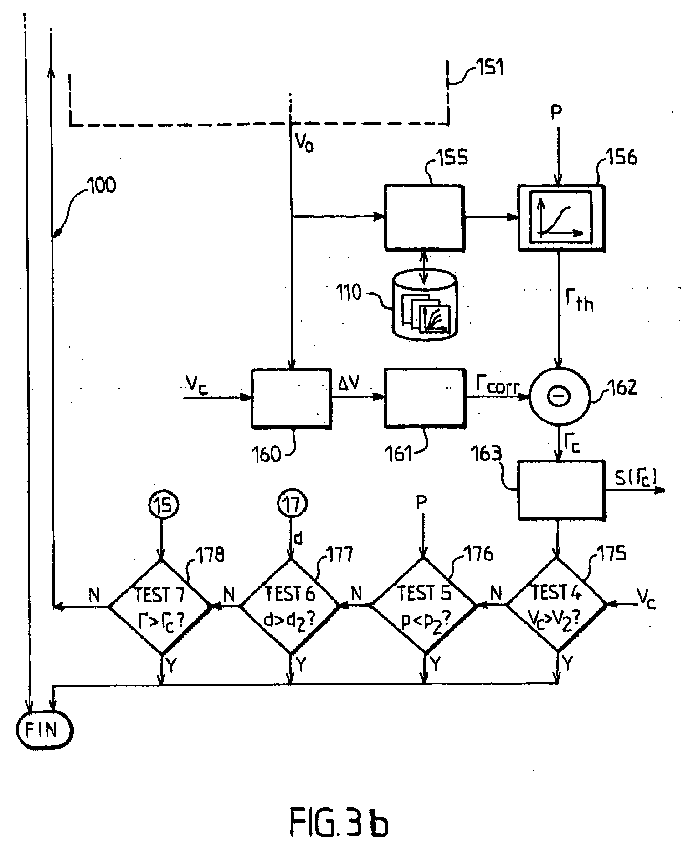

La figure 3, disposée sur deux planches pour plus de clarté, représente de manière schématique la succession des étapes du procédé d'assistance à la conduite selon un premier mode de réalisation de l'invention. Ce procédé est par exemple mis en oeuvre par l'exécution d'un programme correspondant mémorisé dans l'espace mémoire de l'unité de calcul 11.

Le procédé débute par une pluralité de vérifications de conditions d'entrée permettant, lorsqu'elles sont réalisées simultanément, de rentrer dans la boucle principale 100 de détermination du couple de freinage cible.

A l'étape 51, le premier test Test1 consiste à vérifier si le véhicule est engagé sur une pente. Autrement dit, la valeur instantanée de la pente estimée p est comparée à la valeur d'une première pente seuil $p_1$. Pour passer à l'étape suivante, il faut que p soit supérieure à $p_1$. La première pente seuil $p_1$ vaut par exemple 5 %.

A l'étape 52, le deuxième test Test2 consiste à vérifier si le véhicule est à l'arrêt. Ceci se traduit par la comparaison de la vitesse calculée $V_c$ avec une vitesse seuil basse $V_1$. Pour passer à l'étape suivante, $V_c$ doit être inférieure à $V_1$. En fait, $V_1$ n'est pas choisie nulle car les incertitudes dues aux mesures faites par les capteurs entraînent que $V_c$ fluctue autour de zéro alors que le véhicule est effectivement à l'arrêt.

Le troisième test Test3 (étape 53) correspond à la détection d'un comportement du conducteur traduisant une intention de démarrer. Le comportement détecté consiste à enclencher la marche arrière, à relâcher la pédale de frein et à ne pas appuyer, ou très faiblement, sur la pédale d'accélération. Ces informations sont données par les capteurs 15, 16 et 17.

Lorsque toutes les conditions d'entrée sont satisfaites, le programme entre dans la boucle principale 100 de détermination d'un couple de freinage cible $\Gamma_c$. Si l'une de ces conditions d'entrée n'est pas vérifiée, l'unité de calcul 11 stoppe l'exécution du programme. Celui-ci sera exécuté à nouveau depuis le début un premier intervalle de temps prédéterminé plus tard, par exemple quelques dixièmes de secondes plus tard.

Les itérations de la boucle principale sont éxecutes périodiquement à un deuxième intervalle de temps prédéterminé, par exemple de 10 ms. Chaque itération de la boucle principale 100 est indexée par un nombre entier i.

La boucle principale débute par une étape de détermination d'une vitesse souhaitable $V_0$. Au cours de cette étape 151, la vitesse qui semble être souhaitable pour descendre la pente est déterminée. La valeur de vitesse souhaitable $V_0$ peut être une valeur de référence constante prédéfinie par exemple de 3 $kmh^{-1}$.

De préférence, la valeur de vitesse souhaitable $V_0$ peut dépendre de la valeur instantanée de la pente p : plus la pente est importante, plus la vitesse souhaitable $V_0$ est réduite ; plus la pente est faible plus la vitesse souhaitable $V_0$ est augmentée. Par exemple, à l'étape 152 on ajoute un terme correctif à la valeur de référence constante de 3 $kmh^{-1}$, le terme correctif étant proportionnel à l'écart de la pente p à une pente de référence $p_0$ par exemple de 5 %.

En outre, dans le mode de réalisation actuellement préféré, le conducteur peut influer directement sur la valeur de la vitesse souhaitable $V_0$. Si le conducteur déplace la pédale d'accélération au delà d'un premier degré d'enfoncement de la pédale d'accélération $d_1$ tout en restant en deçà d'un deuxième degré d'enfoncement $d_2$, ceci sera interprété comme la volonté du conducteur d'augmenter la vitesse souhaitable $V_0$. Si, à l'étape 152 le degré d'enfoncement d est détecté dans la plage limitée inférieurement par $d_1$ et supérieurement par $d_2$, la vitesse souhaitable $V_0$ de l'itération précédente i-1 est augmentée d'une valeur prédéterminée $\Delta V_0$ à l'étape 154. La vitesse souhaitable $V_0$ sera donc augmentée progressivement au cours d'une succession d'itérations. Si le degré d'enfoncement d n'est pas dans l'intervalle $[d_1, d_2]$ la valeur de $V_0$ calculée à l'étape 152 est prise en compte.

On passe alors à l'étape de détermination d'un couple de freinage théorique. L'espace mémoire 110 de l'unité de calcul 11 comporte une pluralité de tableaux de calibration indexés par une valeur de vitesse. Un tableau de calibration donne la valeur du couple de freinage à appliquer sur les roues du véhicule en fonction de la pente p pour que, si la pente était constante, le véhicule atteigne effectivement la valeur de vitesse servant d'index. Chacun des tableaux de calibration est obtenu en usine en effectuant des tests sur un véhicule caractéristique de la gamme puis en mémorisant les résultats obtenus dans l'espace mémoire de l'unité de calcul de chacun des véhicules.

A l'étape 155, le tableau de calibration dont l'index correspond à la valeur courante de la vitesse souhaitable $V_0$, déterminée en sortie de l'étape 151, est sélectionné parmi l'ensemble des tableaux de calibration présents dans l'espace mémoire 110.

Puis, à l'étape 156, la valeur instantanée de la pente p permet de lire sur le tableau de calibration sélectionné la valeur du couple de freinage théorique $\Gamma_{th}$.

Dans ce mode de réalisation, la valeur du couple de freinage théorique $\Gamma_{th}$ obtenue à l'étape 156 n'est pas émise directement en tant que valeur cible du couple de freinage vers le système de régulation du freinage. En effet, le couple de freinage théorique $\Gamma_{th}$ est le couple à appliquer pour maintenir la vitesse du véhicule à la vitesse souhaitable $V_0$. Mais, la vitesse du véhicule, donnée par la vitesse calculée $V_c$, peut être inférieure à la vitesse souhaitable $V_o$ et il faut alors appliquer un couple de freinage cible $\Gamma_c$ légèrement plus faible que le couple de freinage théorique $\Gamma_{th}$ pour augmenter la vitesse $V_c$ du véhicule. A l'inverse, si la vitesse du véhicule est supérieure à la vitesse souhaitable $V_0$, il faut appliquer un couple de freinage cible $\Gamma_c$ légèrement plus important que le couple de freinage théorique $\Gamma_{th}$ pour réduire la vitesse $V_c$ du véhicule.

Il s'avère donc préférable de corriger le couple de freinage théorique $\Gamma_{th}$ à l'aide d'un couple de correction $\Gamma_{corr}$ pour obtenir le couple de freinage cible $\Gamma_c$. Dans le mode de réalisation décrit, le couple de correction $\Gamma_{corr}$ est une fonction croissante de l'écart $\Delta V$ entre la vitesse souhaitable $V_0$ et la vitesse calculée $V_c$.

A l'étape 160, l'écart $\Delta V$ est obtenu par soustraction de la vitesse calculée $V_c$ de la vitesse souhaitable $V_0$ obtenue en sortie de l'étape 151 : $V = V_0 - V_c$. Il est à noter que si $V_c$ est inférieure à $V_0$, le signe de l'écart $\Delta V$ est positif.

A l'étape 161, le couple de correction $\Gamma_{corr}$ est calculé. Par exemple, $\Gamma_{corr}$ est proportionnel à l'écart $\Delta V$ et à sa dérivée temporelle.

A l'étape 162, le couple de freinage cible $\Gamma_c$ est obtenu par soustraction du couple de correction $\Gamma_{corr}$ au couple de freinage théorique $\Gamma_{th}$. Cette valeur courante du couple de freinage cible $\Gamma_c$ est émise à l'étape 163 sous forme par exemple d'un signal $S(\Gamma_c)$ en direction du système de régulation du système de freinage du véhicule, par ailleurs connu. Le système de freinage applique alors ce couple de freinage, sauf si une autre fonction, par exemple une fonction d'antiblocage des roues, de priorité supérieure, demande l'application d'un autre couple de freinage.

Si l'écart $\Delta V$ est positif, le couple de correction $\Gamma_{th}$ est inférieur au couple théorique $\Gamma_{th}$ et le véhicule peut prendre plus de vitesse dans la pente.

Avant de boucler le processus de détermination du couple de freinage et de débuter une nouvelle itération, différentes conditions de sortie sont testées. Si l'une de ces conditions de sortie est vérifiée, l'exécution du programme sort de la boucle principale 100 est se termine immédiatement.

A l'étape 175, le test Test4 consiste à comparer la valeur de la vitesse calculée $V_c$ avec une vitesse seuil haute $V_2$ par exemple de 20 $kmh^{-1}$. En effet, si le conducteur appuie continûment sur la pédale d'accélération, la vitesse souhaitable $V_0$ augmente et par conséquent la vitesse de descente de la pente augmente également. Il n'est pas nécessaire de poursuivre l'exécution du programme d'assistance à la conduite si la vitesse calculée $V_c$ est supérieure à la vitesse seuil haute $V_2$.

A l'étape 176, le test Test5 consiste à comparer la valeur de la pente p avec une deuxième pente prédéterminée $p_2$. Si le véhicule est arrivé au bas de la pente, qui se caractérise par une pente quasiment nulle, il n'est pas nécessaire de poursuivre l'exécution du programme d'assistance à la conduite. La valeur de la deuxième pente prédéterminée $p_2$ est faible pour tenir compte des erreurs sur la valeur calculée de la pente p.

Il est également souhaitable d'ajouter une condition de sortie Test6 sur l'actionnement de la pédale d'accélération. Si le conducteur appuie sur la pédale d'accélération de manière à ce que le capteur 17 détecte un déplacement important, supérieur au deuxième degré d'enfoncement $d_2$, cela signifie que le conducteur souhaite conserver la main et contrôler lui-même la descente de la pente. Cette condition est testée à l'étape 177.

Une condition de sortie Test7 sur la pédale de frein est testée à l'étape 178. Si le conducteur appuie sur la pédale de frein de manière à produire une force de freinage supérieure à ce que recommande le programme d'assistance à la conduite, i.e. le couple de freinage cible $\Gamma_c$, c'est que le conducteur souhaite reprendre la main et stopper à nouveau le véhicule. Si à l'étape 178 cette condition de sortie est vérifiée, on sort de l'exécution du programme, sinon on exécute une nouvelle itération de la boucle principale 100.

La demanderesse a effectué des essais du comportement cinématique d'un véhicule équipé du dispositif d'assistance à la conduite en descente.

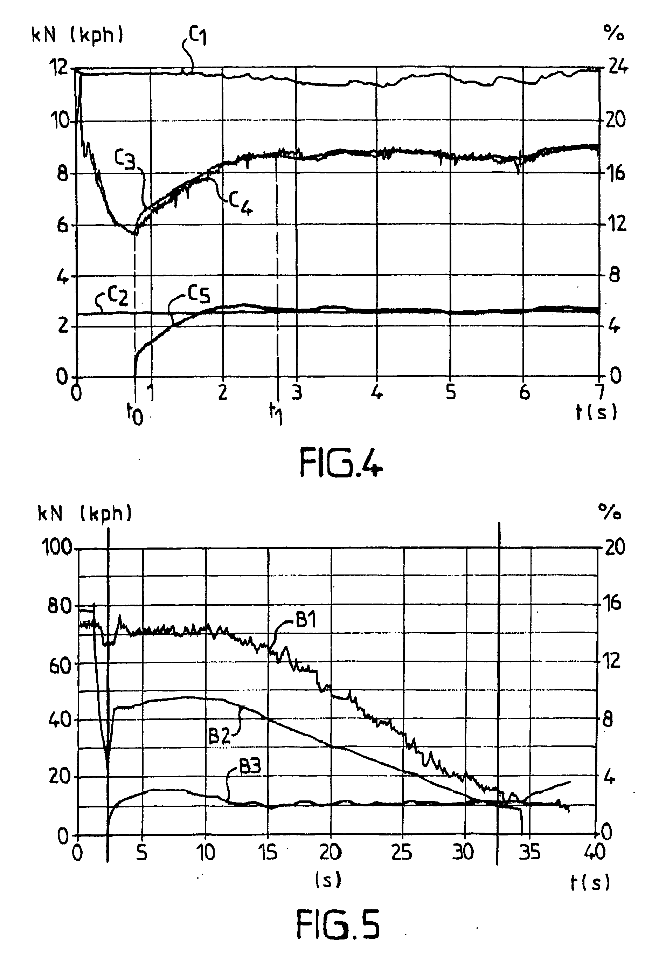

Sur la figure 4, plusieurs graphes sont représentés qui correspondent à des paramètres cinématiques réels d'un véhicule engagé sur une pente sensiblement constante de 24% : la courbe C1 représente l'évolution temporelle de la valeur de la pente p déterminée selon le procédé exposé à la figure 2. Dans cette simulation, le dispositif d'assistance à la conduite est actif dès l'instant t=0 et le reste durant toute la simulation. On suppose que le conducteur n'actionne pas la pédale d'accélération. En conséquence, la vitesse souhaitable $V_0$ est constante au cours de la simulation (courbe C2).

La courbe C3 reproduit les variations du couple de freinage cible $\Gamma_c$. Au début du test, le couple de freinage cible diminue. Dans le mode de réalisation de la fonction d'assistance selon l'invention, la condition d'entrée Test1 est que le véhicule soit initialement à l'arrêt. La fonction d'assistance peut alors comporter en variante une procédure initiale permettant le relâchement progressif des freins. En conséquence, le véhicule, entraîné dans la pente par son poids, acquiert de la vitesse.

Avant l'instant $t_0$, le couple requis par cette procédure de relâchement, bien que diminuant au cours du temps, reste encore supérieur au couple de freinage cible calculé par le dispositif d'assistance.

A l'instant $t_0$, le couple de freinage cible demandé par le dispositif d'assistance devient supérieur au couple de freinage demandé par la procédure initiale. A partir de cet instant, le dispositif d'assistance prend en main le freinage. Il s'agit alors de contrôler le véhicule pour que la vitesse calculée $V_c$, représentée par la courbe C5, tende asymptotiquement vers la vitesse souhaitable $V_0$. Lorsque cette vitesse est effectivement atteinte, par exemple en $t_1$, le couple de freinage à appliquer pour conserver cette vitesse est constant et correspond sensiblement au couple de freinage théorique $\Gamma_{th}$. Sur la figure 4, la courbe C4 représente l'évolution temporelle du couple de freinage effectivement appliqué sur les roues arrière du véhicule et mesuré par des capteurs de force de freinage disposés sur les étriers électromécaniques. Entre les instant $t_0$ et $t_1$, la transition correspond à une correction importante du couple de freinage théorique $\Gamma_{th}$ car l'écart entre la vitesse souhaitable $V_0$ et la vitesse calculée $V_c$ est important. Le couple de freinage cible $\Gamma_c$ augmente progressivement avec la vitesse. Ainsi, le conducteur ne ressent aucun à-coup du système de freinage.

Sur 1a figure 5, lors d'un essai au cours duquel 1e véhicule descend une route dont la pente varie, on a représenté l'évolution temporelle de la pente mesurée p (courbe B1), du couple de freinage cible $\Gamma_c$ (courbe B2) et de la vitesse calculée $V_c$ du véhicule (courbe B3). Les courbes de la figure 5 sont difficiles à interpréter, puisque la pente p évolue en permanence ce qui entraîne une modification continuelle de la vitesse souhaitable $V_0$. Ce qu'il faut noter c'est que l'évaluation de la pente p à un instant donné est immédiatement prise en compte dans le calcul du couple de freinage cible à appliquer. L'avantage du procédé selon ce mode de réalisation de l'invention réside en cette réponse immédiate du dispositif d'assistance à l'information de pente. On n'attend pas que les effets de la pente sur la vitesse du véhicule se fassent ressentir, i.e. une augmentation de la vitesse calculée $V_c$, pour réduire la vitesse en freinant. On anticipe le freinage nécessaire pour maintenir le véhicule à une vitesse constante (courbe B3).

Les phénomènes d'oscillation de la vitesse, dus à la régulation sur la variable de vitesse elle même, n'existent plus ici. Le confort, la sécurité réelle mais également la sécurité perçue par le conducteur sont donc sensiblement améliorés par la mise en oeuvre du procédé d'assistance selon l'invention.

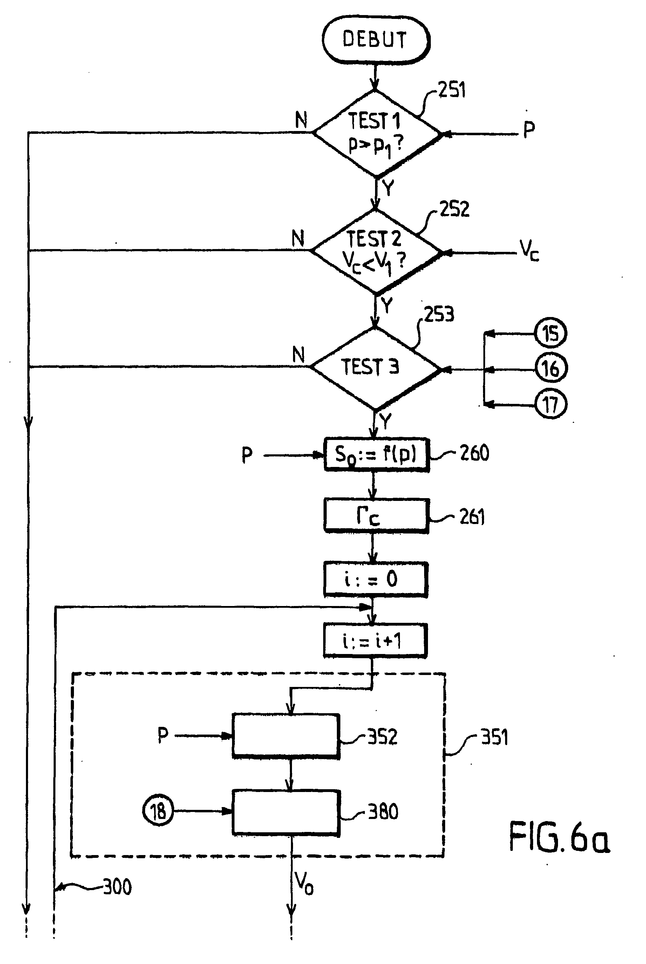

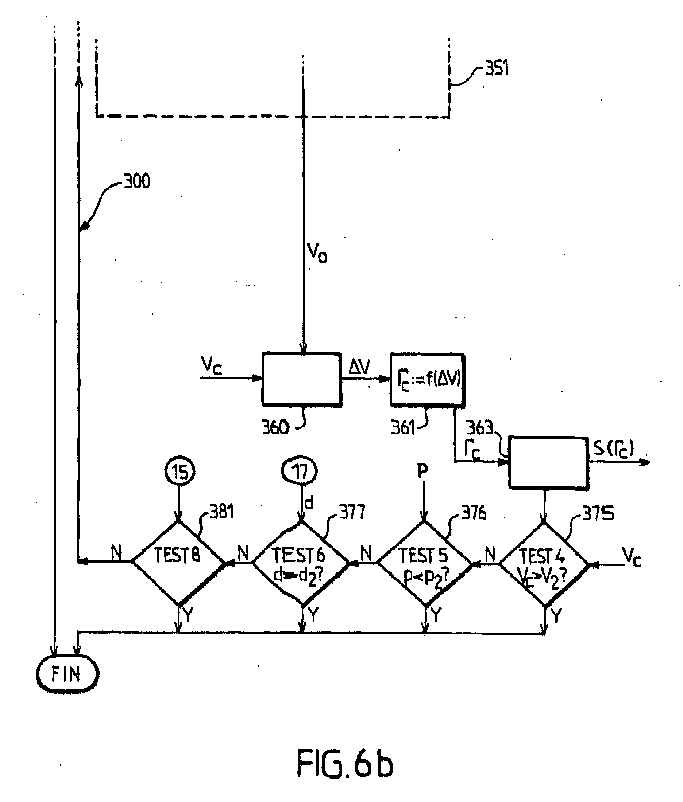

La figure 6, disposée sur deux planches pour plus de clarté, représente de manière schématique la succession des étapes du procédé d'assistance à la conduite selon un deuxième mode de réalisation de l'invention. Ce procédé est par exemple mis en oeuvre par l'exécution d'un programme correspondant mémorisé dans l'espace mémoire de l'unité de calcul 11. Les éléments identiques ou similaires à des éléments du premier mode de réalisation sont désignés par les mêmes numéros de références, augmentés de 200.

Le procédé débute par les étapes 251, 252 et 253 de vérification de conditions d'entrée, par exemple identiques respectivement aux étapes 51, 52 et 53. De préférence, en variante, le véhicule comporte une fonction de maintien sur pente et à l'étape 252, le test Test2 consistant à vérifier si le véhicule est à l'arrêt est effectué en vérifiant que cette fonction de maintien sur pente est active.

Lorsque toutes les conditions d'entrée sont satisfaites, le programme entre dans une procédure initiale de relâchement progressif des freins. Au cours de la procédure initiale, le programme calcule un couple de freinage cible $\Gamma_c$ selon des modalité différentes de la boucle principale et émet un signal correspondant en direction du système de régulation du freinage.

La procédure initiale de relâchement progressif des freins permet de passer d'un couple d'arrêt, qui dans cet exemple est le couple appliqué par la fonction de maintien sur pente pour maintenir le véhicule immobile, à un couple inférieur permettant au véhicule de prendre de la vitesse de manière maîtrisée. La diminution progressive du couple de freinage cible permet d'éviter les à-coups lors du démarrage et d'empêcher une prise de vitesse trop importante. Les fonctions de maintien sur pente sont connues par ailleurs. Le couple d'arrêt est généralement déterminé en fonction de la pente et de la masse du véhicule et avec un coefficient de sécurité garantissant une immobilisation ferme du véhicule.

Selon une autre variante, le couple d'arrêt est le couple appliqué par le frein de stationnement et la condition d'entrée Test3 n'est vérifiée que si on relâche le frein de stationnement.

La procédure initiale se déroule par exemple comme décrit en référence aux étapes 260 et 261. A l'étape 260, le programme détermine un couple théorique $S_0$. Le couple théorique $S_0$ est une fonction de la pente, par exemple une fonction linéaire valant 60% du couple d'arrêt pour une forte pente et 30% pour une faible pente. De préférence, le couple théorique S0 correspond sensiblement, pour une pente donnée, au couple de freinage devant être appliqué pour maintenir constante la vitesse du véhicule, c'est-à-dire pour compenser la pente.

Ensuite, à l'étape 261, la procédure initiale se poursuit selon trois phases. Premièrement, le couple cible $\Gamma_c$, partant du couple d'arrêt, diminue rapidement jusqu'à atteindre la valeur $S_0$. Cette diminution rapide se fait selon un premier taux de variation temporelle $\tau_1$, par exemple de -900 Nm/s, et permet d'atteindre rapidement un couple plus faible. Deuxièmement, le couple cible $\Gamma_c$ continue à diminuer, mais cette fois moins rapidement, selon un deuxième taux de variation temporelle $\tau_2$ valant par exemple -200 Nm/s. Comme après la première phase on a atteint ou approché un niveau de couple de freinage auquel le véhicule n'est plus maintenu sur la pente mais au contraire démarre, la deuxième phase de diminution lente permet de démarrer sans à-coups. Cette deuxième phase se poursuit jusqu'à ce que le véhicule ait pris une vitesse suffisante, ce qui est testé en vérifiant que la vitesse calculée $V_c$ est supérieure à un seuil de vitesse donné. Selon un mode de réalisation particulier, le seuil de vitesse est un seuil de détection destinée à détecter le premier déplacement du véhicule. Pour cela, le seuil de vitesse est placé juste au dessus de la marge d'erreur des capteurs de vitesse de roue. Ensuite, lors de la troisième phase, le couple cible $\Gamma_c$ augmente progressivement, selon un troisième taux de variation temporelle $\tau_3$ par exemple égal, au signe près, au deuxième taux de variation temporelle $\tau_2$. Selon un autre exemple, le taux $\tau_3$ vaut +50 Nm/s. Cette troisième phase se poursuit jusqu'à ce que le couple de freinage cible $\Gamma_c$ atteigne de nouveau le couple théorique $S_0$. La procédure initiale est alors terminée.

Ensuite, le programme entre dans la boucle principale 300 de détermination d'un couple de freinage cible $\Gamma_c$.

La boucle principale débute par une étape 351 de détermination d'une vitesse souhaitable $V_0$. L'étape 351 peut être identique à l'étape 151. Alternativement, comme représenté sur la figure 6a, l'étape 351 comprend une étape 352 de détermination de la vitesse souhaitable $V_0$ en fonction de la valeur instantanée de la pente p. L'étape 352 est par exemple identique à l'étape 152. Selon un autre exemple, la vitesse souhaitable $V_0$ dépend linéairement de la pente p, et vaut 2,8 km/h pour une pente de 10% et 2,2 km/h pour une pente de 30%.

Ensuite, le programme passe à l'étape 380 dans laquelle la vitesse souhaitable déterminée à l'étape 352 est éventuellement modifiée, en fonction de la position de la pédale d'embrayage détectée par le capteur 18. Plus précisément, si à l'étape 380 le capteur 18 indique que la pédale d'embrayage est relâchée, la valeur déterminée à l'étape 352 est augmentée, par exemple d'une valeur déterminée constante de 5,5 km/h. Dans le cas contraire, la valeur déterminée à l'étape 352 n'est pas modifiée. De préférence, une condition supplémentaire pour cette augmentation de vitesse est que le capteur 15 indique que la marche arrière est engagée. En effet si le levier de vitesse est en position de point mort, le risque de caler le moteur comme expliqué ci-dessous est nul et il n'est donc pas nécessaire d'augmenter la vitesse.

L'étape 380 présente deux avantages. Premièrement, elle permet au conducteur de contrôler facilement la vitesse de descente, en enfonçant ou relâchant la pédale d'embrayage. Deuxièmement, si l'embrayage est relâché alors que le système de freinage applique un couple de freinage, l'augmentation de la vitesse souhaitable permet d'éviter que le moteur cale. En effet, une augmentation de la vitesse souhaitable résulte en une diminution du couple de freinage à appliquer. Cette diminution compense donc l'accroissement de la charge du moteur résultant du relâchement de la pédale d'embrayage.

L'étape 351 pourrait également comprendre une étape de détermination de la vitesse souhaitable en fonction de la position de la pédale d'accélérateur, de manière similaire aux étapes 153 et 154. De plus, l'étape 351 peut être utilisée dans le premier mode de réalisation à la place de l'étape 151. Les modes de régulation de la vitesse souhaitable à l'aide de la pédale d'accélération et à l'aide de la pédale d'embrayage peuvent aussi être cumulés.

Le programme passe ensuite à l'étape 360 et détermine un écart $\Delta V$ entre la valeur instantanée de la vitesse souhaitable $V_0$ et la valeur instantanée d'une vitesse calculée $V_c$.

Dans ce mode de réalisation, de préférence, la vitesse $V_c$ ne correspond pas à la vitesse moyenne du véhicule, mais à la vitesse d'une des roues du véhicule, et, dans ce cas, le couple de freinage cible $\Gamma_c$ déterminé est le couple à appliquer sur cette roue. Dans ce cas, par exemple, plusieurs instances du programme s'exécutent en parallèle, pour au moins deux roues, de préférence les roues arrières, et éventuellement pour les quatre roues. Selon un autre exemple, seule les étapes 360, 361 et 363 sont effectuées plusieurs fois en parallèle pour deux ou quatre roues, les autres étapes étant effectuées de manière commune pour les différentes roues. Une telle détermination individuelle du couple de freinage cible pour au moins deux roues permet d'augmenter la précision de la régulation de vitesse et d'améliorer le confort. Bien entendu, une telle détermination individuelle est également applicable dans le premier mode de réalisation, et à l'inverse une détermination globale est applicable dans le deuxième mode de réalisation.

A l'étape 361, le couple de freinage cible est déterminé en fonction de l'écart de vitesse $\Delta V$, par exemple suivant une régulation proportionnelle et dérivative (PD) ou proportionnelle, intégrale et dérivative (PID), pour que, par rétroaction, la vitesse $V_c$ soit égale à la vitesse souhaitable $V_0$, autrement dit pour que $\Delta V$ tende vers une valeur nulle.

La régulation PD ou PID est telle qu'il n'y a pas de discontinuité dans la valeur du couple de freinage cible $\Gamma_c$, c'est-à-dire aucune variation brusque, ni lors des itérations successives de la boucle principale 300, ni lors de la transition entre la procédure initiale et la boucle principale 300.

Dans le cas où la détermination individuelle du couple de freinage cible se fait pour les quatre roues, les gains de contrôle de cette régulation PD ou PID peuvent être différents pour les roues avant et pour les roues arrière.

Ensuite à l'étape 363 la valeur du couple de freinage cible $\Gamma_c$ est émise sous forme par exemple d'un signal $S(\Gamma_c)$ en direction du système de régulation du système de freinage du véhicule, par ailleurs connu.

Le programme se poursuit par la vérification de conditions de sorties, selon les étapes 375, 376 et 377, identiques respectivement aux étapes 175, 176 et 177. De préférence, le programme selon le deuxième mode de réalisation ne comprend pas d'étape correspondant à l'étape 178, qui est également facultative dans le premier mode de réalisation. Ainsi, si le conducteur freine de manière à appliquer un couple de freinage supérieur au couple de freinage cible puis relâche la pédale de frein, le couple de freinage sera toujours sous le contrôle du procédé d'assistance et le conducteur ne sera pas surpris par une augmentation de la vitesse.

Dans le deuxième mode de réalisation, une condition de sortie Test8 supplémentaire sur la position de levier de boite de vitesse est testée à l'étape 381. Cette étape pourrait également être présente dans le premier mode de réalisation. Si le conducteur a enclenché une marche avant, ce qui est détecté par le capteur 15, c'est que le conducteur souhaite reprendre la main et stopper le véhicule. Si à l'étape 381 cette condition est vérifiée, on sort de l'exécution du programme, pour passer par exemple à l'exécution d'un programme de maintien sur pente.

Comme expliqué ci-dessus, le couple de freinage cible peut être déterminé de manière individuelle pour deux ou quatre roues. De préférence, le choix d'une régulation sur deux ou quatre roues est effectué comme décrit ci-dessous.

Si la pente p est supérieure à un seuil déterminé, par exemple de 20%, le couple de freinage cible est déterminé individuellement pour les quatre roues.

Si l'écart de vitesse $\Delta V$ est supérieur à un seuil donné pendant une durée supérieure à une durée donnée, le couple de freinage cible est déterminé individuellement pour les quatre roues.

Dans le cas contraire, le couple de freinage cible est déterminé individuellement pour les deux roues arrière, et le couple de freinage cible pour les deux roues avant est nul.

Un module de programme s'exécute en parallèle avec le(s) programme(s) de détermination d'un couple de freinage cible, teste les conditions ci-dessus et commande la détermination et l'application d'un couple de freinage cible pour deux ou quatre roues. Bien entendu, des coefficients multiplicatifs de répartition sont appliqués aux couples de freinage cibles déterminés, en fonction de l'application sur deux ou quatre roues, pour que le couple total appliqué corresponde à la vitesse souhaitable.

Le procédé d'assistance selon l'invention facilite grandement le conduite du véhicule, notamment lors de manoeuvre sur pente à petite vitesse, par exemple des manoeuvre de parking. Il est possible de contrôler le véhicule avec seulement deux pédales, la pédale d'accélérateur et la pédale d'embrayage dans le cas d'un véhicule à transmission manuelle.

Ce procédé est avantageusement combiné avec une fonction de maintien sur pente. Par exemple, lorsque le procédé se termine parce que la condition Test8 est vérifiée, une fonction de maintien sur pente peut être activée, alors que si le procédé se termine parce que une des autres conditions de sorties est vérifie, le véhicule peut poursuivre son déplacement. Ainsi il est possible d'arrêter facilement le véhicule sur une pente.

Des essais avec un dispositif d'assistance à la conduite mettant en oeuvre le procédé selon le deuxième mode de réalisation ont donné des résultats similaires, en terme de confort, avec ceux des figures 4 et 5.

Dans une autre variante du procédé selon l'invention, l'assistance à la descente d'une pente est utilisée lorsque l'orientation du véhicule est telle que l'avant du véhicule est dirigé vers le bas de la pente. Pour activer le mode d'assistance, il faut alors tester (Test3) si la première vitesse est enclenchée. Dans ce cas, à l'étape 381 le test Test8 est vérifié si le conducteur enclenche la marche arrière.Le procédé d'assistance est avantageusement mis en oeuvre dans un véhicule comportant un système de freinage hybride de telle sorte que le couple de freinage cible calculé par le procédé d'assistance soit spécifiquement appliqué sur les seules roues arrière. De cette manière, les caractéristiques particulières des étriers électromécaniques sont utilisées et en particulier leur actionnement silencieux.

Bien que l'invention ait été décrite en liaison avec plusieurs modes de réalisation particuliers, il est bien. évident qu'elle n'est nullement limitée à ceux-ci et qu'elle comprend tous les équivalents techniques des moyens décrits ainsi que leurs combinaisons si celles-ci entrent dans le cadre de l'invention.

## Revendications

**1.** Procédé d'assistance à la conduite d'un véhicule engagé sur une pente, ledit véhicule comportant :

    - un système de freinage découplé de l'actionnement d'une pédale de frein par le conducteur du véhicule et apte à appliquer un couple de freinage sur au moins une roue dudit véhicule ;
- au moins un capteur de vitesse de roue (5) apte à mesurer une vitesse instantanée d'une roue dudit véhicule ;
le procédé comportant les étapes consistant à :
- déterminer la valeur instantanée de la pente sur laquelle se trouve ledit véhicule ;
- tester l'existence initiale simultanée de conditions initiales comportant au moins une condition d'entrée ; et, une fois que lesdites conditions initiales sont toutes vérifiées et tant qu'au moins une condition de sortie (175-178 ; 375-377, 380) n'est pas vérifiée, réaliser des itérations successives d'une boucle principale (100, 300) de détermination d'un couple de freinage cible ($\Gamma_c$) consistant à :

○ définir une vitesse souhaitable ($V_0$) devant être atteinte par le véhicule ;
○ déterminer ledit couple de freinage cible ($\Gamma_c$) en fonction d'un écart ($\Delta V$) entre la valeur instantanée de ladite vitesse souhaitable ($V_0$) et la valeur instantanée d'une vitesse calculée ($V_c$), calculée à partir des mesures effectuées par ledit au moins un capteur de roue (5) ; et,
○ émettre (163, 363) un signal correspondant à la valeur dudit couple de freinage cible ($\Gamma_c$) en direction d'un système de régulation du freinage appartenant au système de freinage ;

**caractérisé en ce que** lesdites conditions initiales comportent une condition d'entrée vérifiée lorsque le véhicule est à l'arrêt (52, 252) et **en ce qu'**à partir du moment où lesdites conditions initiales sont toutes vérifiées et jusqu'à ce qu'une condition de sortie de procédure initiale soit vérifiée, ledit couple de freinage cible est déterminé selon une procédure initiale de relâchement progressif des freins (260, 261) comprenant l'étape consistant à faire diminuer temporellement ledit couple de freinage cible depuis une valeur initiale d'arrêt, ladite condition de sortie de procédure initiale dépendant d'une comparaison entre ledit couple de freinage cible ($\Gamma_c$) et un couple de freinage théorique ($\Gamma_{th}$, $S_0$) qui est une fonction de la valeur de la pente (p).

2. Procédé selon la revendication 1, **caractérisé en ce que** ladite procédure initiale comprend les étapes consistant à :

- diminuer ledit couple de freinage cible ($\Gamma_c$) jusqu'à ce que ladite vitesse calculée ($V_c$) soit supérieure à un seuil de vitesse prédéterminé,
- augmenter ledit couple de freinage cible ($\Gamma_c$), jusqu'à ce que ladite condition de sortie de procédure initiale soit vérifiée, ladite condition de sortie de procédure initiale étant vérifiée lorsque ledit couple de freinage cible ($\Gamma_c$) est supérieur audit couple de freinage théorique ($S_0$).

3. Procédé selon la revendication 2, **caractérisé en ce que** ledit couple de freinage théorique ($S_0$) est sensiblement égale au couple à appliquer sur ladite au moins une roue du véhicule pour maintenir la vitesse du véhicule constante.

4. Procédé selon la revendication 2 ou la revendication 3, **caractérisé en ce que** l'étape de diminution du couple de freinage cible est d'abord effectuée selon un premier taux de variation temporelle ($\tau_1$) jusqu'à ce que ledit couple de freinage cible soit inférieur audit couple de freinage théorique ($S_0$), puis selon un deuxième taux de variation temporelle ($\tau_2$) jusqu'à ce que ladite vitesse calculée ($V_c$) soit supérieure à un seuil de vitesse prédéterminé, ledit premier taux de variation temporelle étant supérieur audit deuxième taux de variation temporelle.

5. Procédé selon l'une des revendications 2 à 4, **caractérisé en ce que** l'étape d'augmentation du couple de freinage cible est effectuée selon un troisième taux de variation temporelle ($\tau_3$).

6. Procédé selon l'une des revendications 1 à 5, **caractérisé en ce que** lorsque lesdites conditions initiales sont toutes vérifiées, le procédé comporte ladite procédure initiale de relâchement progressif des freins exécutée en parallèle de ladite boucle principale (100), ladite condition de sortie de procédure initiale étant vérifiée dès que le couple de freinage cible ($\Gamma_c$) déterminé par ladite boucle principale est supérieur au couple de freinage cible ($\Gamma_c$) déterminé par ladite procédure initiale.

7. Procédé selon l'une des revendications 1 à 6, **caractérisé en ce que** le procédé comporte une étape consistant, à chaque itération de ladite boucle principale (100, 300), à déterminer ladite vitesse de descente souhaitable ($V_0$) en fonction de la valeur instantanée de la pente (p) déterminée.

8. Procédé selon l'une des revendications 1 à 7, ledit véhicule comportant une pédale d'accélération et un capteur d'accélération (17) apte à mesurer le degré d'enfoncement de ladite pédale d'accélération par le conducteur, **caractérisé en ce que,** à chaque itération, ladite vitesse souhaitable ($V_0$) est déterminée en fonction de la valeur instantanée du degré d'enfoncement de la pédale (d), à condition que ladite valeur instantanée du degré d'enfoncement de la pédale d'accélération soit comprise dans une plage limitée inférieurement par un premier degré prédéterminé d'enfoncement de la pédale d'accélération ($d_1$) et supérieurement par un deuxième degré prédéterminé d'enfoncement de la pédale d'accélération ($d_2$).

**9.** Procédé selon la revendication 8, **caractérisé en ce qu'**à chaque itération, ladite vitesse souhaitable ($V_0$) est augmentée d'une valeur prédéterminée ($\Delta V_0$) par rapport à la vitesse souhaitable déterminée à l'itération précédente, à condition que ladite valeur instantanée du degré d'enfoncement de la pédale d'accélération soit comprise dans ladite plage.

**10.** Procédé selon l'une des revendications 1 à 9, ledit véhicule comprenant une pédale d'embrayage et un capteur de déplacement de la pédale d'embrayage (18), **caractérisé en ce que** ladite étape consistant à déterminer ladite vitesse souhaitable comprend l'étape consistant à ajouter une valeur déterminée lorsque ledit capteur de déplacement de la pédale d'embrayage (18) indique que ladite pédale d'embrayage est relâchée.

**11.** Procédé selon l'une des revendications 1 à 10, **caractérisé en ce que** ledit couple de freinage théorique ($\Gamma_{th}$) est déterminé à partir d'un tableau de calibration donnant la valeur du couple de freinage en fonction de la pente (p).

**12.** Procédé selon l'une des revendications 1 à 11, **caractérisé en ce que** lesdites conditions initiales comportent une condition d'entrée qui consiste à comparer (51, 251) une valeur instantanée de ladite pente (p) par rapport à une première pente seuil prédéterminée ($p_1$), ladite condition d'entrée étant vérifiée lorsque ladite valeur instantanée de ladite pente est supérieure à ladite première pente seuil.

**13.** Procédé selon l'une des revendications 1 à 12, **caractérisé en ce que** ladite au moins une condition de sortie consiste à comparer (176, 376) une valeur instantanée de ladite pente (p) par rapport à une deuxième pente prédéterminée ($p_2$), la condition de sortie étant vérifiée lorsque ladite valeur instantanée de la pente est inférieure à ladite deuxième pente prédéterminée.

**14.** Procédé selon l'une des revendications 1 à 13, **caractérisé en ce que** ladite au moins une condition de sortie consiste à comparer (175, 375) une vitesse instantanée ($V_c$), calculée à partir des mesures effectuées par ledit au moins un capteur de vitesse de roue (5), par rapport à une vitesse seuil haute ($V_2$), ladite condition de sortie étant vérifiée lorsque ladite vitesse instantanée est supérieure à une vitesse seuil haute.

**15.** Procédé selon la revendication 4, **caractérisé en ce que** lesdites itérations successives de ladite boucle principale (100) comprennent les étapes consistant à :

○ déterminer (156) ledit couple de freinage théorique ($\Gamma_{th}$) pour que le véhicule atteigne une vitesse souhaitable ($V_0$) ;
○ corriger (162) la valeur dudit couple de freinage théorique en fonction dudit écart de vitesse pour obtenir ledit couple de freinage cible ($\Gamma_c$).

**16.** Procédé selon l'une quelconque des revendications 1 à 15, **caractérisé en ce que** ledit véhicule comprend un accéléromètre (19) apte à mesurer une accélération longitudinale de la caisse dudit véhicule en tant qu'accélération longitudinale mesurée ($A_m$), ladite valeur instantanée de la pente étant déterminée en :

○ calculant une accélération longitudinale instantanée ($A_c$) à partir des mesures de vitesse de roue faite par ledit au moins un capteur de vitesse de roue ;
○ déterminant une pente (p) par comparaison de ladite accélération longitudinale instantanée avec ladite accélération longitudinale mesurée par ledit accéléromètre.

**17.** Unité de calcul (11) programmable comportant un processeur et au moins un espace mémoire (110), lendit espace mémoire comportant des codes d'instruction d'un programme d'assistance à la conduite d'un véhicule engagé sur une pente, **caractérisé en ce que** ledit programme d'assistance à la conduite met en oeuvre un procédé d'assistance à la conduite selon l'une quelconque des revendications 1 à 16.

**18.** Dispositif d'assistance à la conduite d'un véhicule engagé sur une pente, comportant :

- un système de freinage découplé de l'actionnement par le conducteur d'une pédale de frein;
- au moins un capteur de vitesse de roue (5) apte à mesurer la vitesse instantanée d'une roue dudit véhicule ;

- un accéléromètre (19) apte à mesurer une accélération longitudinale de la caisse dudit véhicule en tant qu'accélération longitudinale mesurée ($A_m$) ;
- une unité de calcul programmable (11) ;

**caractérisé en ce que** ladite unité de calcul programmable est une unité de calcul selon la revendication 17.

**Claims**

1. Process for assisting driving of a vehicle engaged on a gradient, the said vehicle including:

   - a braking system decoupled from the actuation of a brake pedal by the driver of the vehicle and able to apply a braking torque to at least one wheel of the said vehicle;
   - at least one wheel velocity sensor (5) able to measure an instantaneous velocity of a wheel of the said vehicle; the process including the steps consisting of:
   - determining the instantaneous value of the gradient on which the said vehicle is situated;
   - testing the simultaneous initial existence of initial conditions including at least one entry condition; and, once the said initial conditions are all verified and while at least one exit condition (175-178; 375-377, 380) is not verified, performing successive iterations of a main loop (100, 300) for determination of a target braking torque ($\Gamma_c$) consisting of:

     • defining a desirable velocity ($V_0$) having to be attained by the vehicle;
     • determining the said target braking torque ($\Gamma_c$) as a function of a difference ($\Delta V$) between the instantaneous value of the said desirable velocity ($V_0$) and the instantaneous value of a calculated velocity ($V_c$), calculated from measurements taken by the said at least one wheel sensor (5); and,
     • transmitting (163, 363) a signal corresponding to the value of the said target braking torque ($\Gamma_c$) to a braking control system belonging to the braking system;

   **characterised by** the fact that the said initial conditions include an entry condition verified when the vehicle is stationary (52, 252) and by the fact that from the moment at which the said initial conditions are all verified and until a condition for exiting the initial procedure is verified, the said target braking torque is determined by an initial procedure of progressive release of the brakes (260, 261) comprising the step consisting of temporally reducing the said target braking torque from an initial stop value, the said condition for exiting the initial procedure depending on a comparison between the said target braking torque ($\Gamma_c$) and a theoretical braking torque ($\Gamma_{th}$, $S_0$) which is a function of the value of the gradient (p).

2. Process as described in claim 1, **characterised by** the fact that the said initial procedure comprises the steps consisting of:

   • reducing the said target braking torque ($\Gamma_c$) until the said calculated velocity ($V_c$) is greater than a predetermined threshold velocity,
   • increasing the said target braking torque ($\Gamma_c$) until the said condition for exiting the initial procedure is verified, the said condition for exiting the initial procedure being verified when the said target braking torque ($\Gamma_c$) is greater than the said theoretical braking torque (So).

3. Process as described in claim 2, **characterised by** the fact that the said theoretical braking torque (So) is substantially equal to the torque to be applied to the said at least one wheel of the vehicle to keep the velocity of the vehicle constant.

4. Process as described in claim 2 or claim 3, **characterised by** the fact that the step of reducing the target braking torque is firstly performed at a first rate of temporal variation ($\tau_1$) until the said target braking torque is less than the said theoretical braking torque ($S_0$), and then at a second rate of temporal variation ($\tau_2$) until the said calculated velocity ($V_c$) is greater than a predetermined threshold velocity, the said first rate of temporal variation being greater than the said second rate of temporal variation.

5. Process as described in one of claims 2 to 4, **characterised by** the fact that the step of increasing the target braking torque is performed at a third rate of temporal variation ($\tau_3$).

6. Process as described in one of claims 1 to 5, **characterised by** the fact that when the said initial conditions are all verified, the process includes the said initial procedure of progressive release of the brakes executed in parallel with the said main loop (100), the said condition for exiting the initial procedure being verified as soon as the target braking torque ($\Gamma_c$) determined by the said main loop is greater than the target braking torque ($\Gamma_c$) determined by the said initial procedure.

7. Process as described in one of claims 1 to 6, **characterised by** the fact that the process includes a step consisting, at each iteration of the said main loop (100, 300), of determining the said desirable descent velocity ($V_0$) as a function of the determined instantaneous value of the gradient (p).

8. Process as described in one of claims 1 to 7, the said vehicle having an accelerator pedal and an acceleration sensor (17) able to measure the degree of depression of the said accelerator pedal by the driver, **characterised by** the fact that, at each iteration, the said desirable velocity ($V_0$) is determined as a function of the instantaneous value of the degree of depression of the pedal (d), on the condition that the said instantaneous value of the degree of depression of the accelerator pedal is within a range limited at the lower end by a first predetermined degree of depression of the accelerator pedal ($d_1$) and at the upper end by a second predetermined degree of depression of the accelerator pedal ($d_2$).

9. Process as described in claim 8, **characterised by** the fact that at each iteration, the said desirable velocity ($V_0$) is increased by a predetermined value ($\Delta V_0$) relative to the desirable velocity determined in the preceding iteration, on condition that the said instantaneous value of the degree of depression of the accelerator pedal is within the said range.

10. Process as described in one of claims 1 to 9, the said vehicle having a clutch pedal and a sensor of displacement of the clutch pedal (18), **characterised by** the fact that the said step consisting of determining the said desirable velocity comprises the step consisting of adding a determined value when the said sensor of displacement of the clutch pedal (18) indicates that the said clutch pedal is released.

11. Process as described in one of claims 1 to 10, **characterised by** the fact that the said theoretical braking torque ($\Gamma_{th}$) is determined from a calibration table giving the value of the braking torque as a function of the gradient (p).

12. Process as described in one of claims 1 to 11, **characterised by** the fact that the said initial conditions include an entry condition which consists of comparing (51, 251) an instantaneous value of the said gradient (p) relative to a first predetermined threshold gradient ($p_1$), the said entry condition being verified when the said instantaneous value of the said gradient is greater than the said first threshold gradient.

13. Process as described in one of claims 1 to 12, **characterised by** the fact that the said at least one exit condition consists of comparing (176, 376) an instantaneous value of the said gradient (p) relative to a second predetermined gradient ($p_2$), the output condition being verified when the said instantaneous value of the gradient is less than the said second predetermined gradient.

14. Process as described in one of claims 1 to 13, **characterised by** the fact that the said at least one exit condition consists of comparing (175, 375) an instantaneous velocity ($V_c$), calculated from measurements taken by the said at least one wheel velocity sensor (5), relative to an upper velocity threshold ($V_2$), the said exit condition being verified when the said instantaneous velocity is greater than an upper threshold velocity.

15. Process as described in claim 4, **characterised by** the fact that the said successive iterations of the said main loop (100) comprise the steps consisting of:

   • determining (156) the said theoretical braking torque ($\Gamma_{th}$) for the vehicle to attain a desirable velocity ($V_0$);
   • correcting (162) the value of the said theoretical braking torque as a function of the said velocity difference to obtain the said target braking torque ($\Gamma_c$).

16. Process as described in any one of claims 1 to 15, **characterised by** the fact that the said vehicle has an accelerometer (19) able to measure a longitudinal acceleration of the body of the said vehicle as measured longitudinal acceleration ($A_m$), the said instantaneous value of the gradient being determined by:

   • calculating an instantaneous longitudinal acceleration ($A_c$) from wheel velocity measurements taken by the said at least one wheel velocity sensor;

• determining a gradient (p) by comparison of the said instantaneous longitudinal acceleration with the said longitudinal acceleration measured by the said accelerometer.

17. Programmable computer unit (11) including a processor and at least one memory space (110), the said memory space including instruction codes of a program for assisting driving of a vehicle engaged on a gradient, **characterised by** the fact that the said program for assisting driving employs a process for assisting driving as described in any one of claims 1 to 16.

18. Device for assisting driving of a vehicle engaged on a gradient, including:

- a braking system decoupled from the actuation of a brake pedal by the driver;
- at least one wheel sensor (5) able to measure the instantaneous velocity of a wheel of the said vehicle;
- an accelerometer (19) able to measure a longitudinal acceleration of the body of the said vehicle as measured longitudinal acceleration ($A_m$);
- a programmable computer unit (11);

**characterised by** the fact that the said programmable computer unit is a computer unit as described in claim 17.

**Patentansprüche**

1. Verfahren zum Assistieren beim Fahren eines Fahrzeugs auf einem Gefälle, wobei das genannte Fahrzeug Folgendes umfasst:

- ein Bremssystem, das von der Betätigung eines Bremspedals durch den Fahrer des Fahrzeugs abgekoppelt ist und ein Bremsmoment auf wenigstens ein Rad des genannten Fahrzeugs aufbringen kann;
- wenigstens einen Radgeschwindigkeitssensor (5) zum Messen einer Momentangeschwindigkeit eines Rades des genannten Fahrzeugs;
wobei das Verfahren die folgenden Schritte beinhaltet:
- Ermitteln des Momentanwertes des Gefälles, auf dem sich das genannte Fahrzeug befindet;
- Prüfen des gleichzeitigen anfänglichen Vorliegens von Anfangsbedingungen, die wenigstens eine Eingangsbedingung umfassen; und wenn die genannten Anfangsbedingungen alle erfüllt sind und solange wenigstens eine Ausgangsbedingung (175-178; 375-377, 380) nicht erfüllt ist, Ausführen von aufeinander folgenden Iterationen einer Hauptschleife (100, 300) zum Ermitteln eines Sollbremsmoments ($\Gamma_c$), die Folgendes beinhaltet:

• Definieren einer gewünschten Geschwindigkeit ($V_0$), bevor sie von dem Fahrzeug erreicht wird;
• Ermitteln des genannten Sollbremsmoments ($\Gamma_c$) in Abhängigkeit von einer Abweichung ($\Delta V$) zwischen dem Momentanwert der genannten gewünschten Geschwindigkeit ($V_0$) und dem Momentanwert einer berechneten Geschwindigkeit ($V_c$), berechnet auf der Basis von von dem genannten wenigstens einen Radsensor (5) durchgeführten Messungen; und
• Aussenden (163, 363) eines Signals, das dem Wert des genannten Sollbremsmoments ($\Gamma_c$) in Richtung eines Bremsregelsystems entspricht, das zu dem Bremssystem gehört;

**dadurch gekennzeichnet, dass** die genannten Anfangsbedingungen eine Eingangsbedingung umfassen, die erfüllt ist, wenn das Fahrzeug steht (52, 252), und dadurch, dass ab dem Moment, in dem die genannten Anfangsbedingungen alle erfüllt sind und bis eine Ausgangsbedingung der anfänglichen Prozedur erfüllt ist, das genannte Sollbremsmoment gemäß einer anfänglichen Prozedur des progressiven Loslassens von Bremsen (260, 261) bestimmt wird, die den Schritt des vorübergehenden Reduzierens des genannten Sollbremsmoments von einem anfänglichen Anhaltewert beinhaltet, wobei die genannte Ausgangsbedingung der anfänglichen Prozedur von einem Vergleich zwischen dem genannten Sollbremsmoment ($\Gamma_c$) und einem theoretischen Bremsmoment ($\Gamma_{th}$, $S_0$) abhängig ist, das eine Funktion des Wertes des Gefälles (p) ist.

2. Verfahren nach Anspruch 1, **dadurch gekennzeichnet, dass** die genannte anfängliche Prozedur die folgenden Schritte beinhaltet:

- Verringern des genannten Sollbremsmoments ($\Gamma_c$), bis die genannte berechnete Geschwindigkeit ($V_c$) höher ist als ein vorbestimmter Geschwindigkeitsschwellenwert,
- Erhöhen des genannten Sollbremsmoments ($\Gamma_c$), bis die genannte Ausgangsbedingung der anfänglichen Prozedur erfüllt ist, wobei die genannte Ausgangsbedingung der anfänglichen Prozedur erfüllt ist, wenn das genannte Sollbremsmoment ($\Gamma_c$) größer ist als das genannte theoretische Bremsmoment (So).

3. Verfahren nach Anspruch 2, **dadurch gekennzeichnet, dass** das genannte theoretische Bremsmoment ($S_0$) im Wesentlichen gleich dem Moment ist, das auf das genannte wenigstens eine Rad des Fahrzeugs aufgebracht werden muss, um die Geschwindigkeit des Fahrzeugs konstant zu halten.

4. Verfahren nach Anspruch 2 oder Anspruch 3, **dadurch gekennzeichnet, dass** der Schritt des Verringerns des Sollbremsmoments zunächst gemäß einer ersten zeitlichen Variationsrate ($\tau_1$) erfolgt, bis das genannte Sollbremsmoment kleiner ist als das genannte theoretische Bremsmoment ($S_0$), dann gemäß einer zweiten zeitlichen Varia-tionsrate ($\tau_2$), bis die genannte berechnete Geschwindigkeit ($V_c$) höher ist als ein vorbestimmter Geschwindigkeitsschwellenwert, wobei die genannte erste zeitliche Geschwindigkeitsvariationsrate größer ist als die genannte zweite zeitliche Variationsrate.

5. Verfahren nach einem der Ansprüche 2 bis 4, **dadurch gekennzeichnet, dass** der Schritt des Erhöhens des Sollbremsmoments gemäß einer dritten zeitlichen Variationsrate ($\tau_3$) erfolgt.

6. Verfahren nach einem der Ansprüche 1 bis 5, **dadurch gekennzeichnet, dass,** wenn die genannten Anfangsbedingungen alle erfüllt sind, das Verfahren die genannte anfängliche Prozedur des progressiven Loslassens der Bremsen parallel zu der genannten Hauptschleife (100) beinhaltet, wobei die genannte Ausgangsbedingung der anfänglichen Prozedur erfüllt ist, sobald das von der genannten Hauptschleife ermittelte Sollbremsmoment ($\Gamma_c$) größer ist als das von der genannten anfänglichen Prozedur ermittelte Sollbremsmoment ($\Gamma_c$).

7. Verfahren nach einem der Ansprüche 1 bis 6, **dadurch gekennzeichnet, dass** das Verfahren einen Schritt beinhaltet, der bei jeder Iteration der genannten Hauptschleife (100, 300) darin besteht, die genannte gewünschte Bergabgeschwindigkeit ($V_0$) in Abhängigkeit vom Momentanwert des ermittelten Gefälles (p) zu bestimmen.

8. Verfahren nach einem der Ansprüche 1 bis 7, wobei das genannte Fahrzeug ein Beschleunigungspedal und einen Beschleunigungssensor (17) zum Messen umfasst, in welchem Grad der Fahrer das genannte Beschleunigungspedal niederdrückt, **dadurch gekennzeichnet, dass** bei jeder Iteration die genannte gewünschte Geschwindigkeit ($V_0$) in Abhängigkeit vom Momentanwert des Niederdrückungsgrades des Pedals (d) ermittelt wird, unter der Bedingung, dass der genannte Momentanwert des Niederdrückungsgrades des Beschleunigungspedals in einem begrenzten Bereich liegt, der unten durch einen ersten vorbestimmten Niederdrückungsgrad des Beschleunigungs-pedals ($d_1$) und oben durch einen zweiten vorbestimmten Niederdrückungsgrad des Beschleunigungspedals ($d_2$) begrenzt wird.

9. Verfahren nach Anspruch 8, **dadurch gekennzeichnet, dass** bei jeder Iteration die genannte gewünschte Ge-schwindigkeit ($V_0$) um einen vorbestimmten Wert ($\Delta V_0$) in Bezug auf die bei der vorherigen Wiederholung ermittelte gewünschte Geschwindigkeit erhöht wird, unter der Bedingung, dass der genannte Momentanwert des Niederdrük-kungsgrades des Beschleunigungspedals innerhalb des genannten Bereichs liegt.

10. Verfahren nach einem der Ansprüche 1 bis 9, wobei das genannte Fahrzeug ein Kupplungspedal und einen Kupplungspedalbewegungssensor (18) beinhaltet, **dadurch gekennzeichnet, dass** der genannte Schritt des Ermittelns der genannten gewünschten Geschwindigkeit den Schritt des Addierens eines bestimmten Wertes umfasst, wenn der genannte Kupplungspedalbewegungssensor (18) anzeigt, dass das genannte Kupplungspedal losgelassen wurde.

11. Verfahren nach einem der Ansprüche 1 bis 10, **dadurch gekennzeichnet, dass** das genannte theoretische Brems-moment ($\Gamma_{th}$) auf der Basis einer Kalibrationstabelle bestimmt wird, die den Wert des Bremsmoments in Abhängigkeit vom Gefälle (p) angibt.

12. Verfahren nach einem der Ansprüche 1 bis 11, **dadurch gekennzeichnet, dass** die genannten Anfangsbedingungen eine Eingangsbedingung beinhalten, die darin besteht, einen Momentanwert des genannten Gefälles (p) mit Bezug auf eine erste vorbestimmte Gefälleschwelle ($p_1$) zu vergleichen, wobei die genannte Eingangsbedingung erfüllt ist, wenn der genannte Momentanwert des genannten Gefälles größer ist als die genannte erste Gefälleschwelle.

13. Verfahren nach einem der Ansprüche 1 bis 12, **dadurch gekennzeichnet, dass** die genannte wenigstens eine Ausgangsbedingung darin besteht, einen Momentanwert des genannten Gefälles (p) mit Bezug auf ein zweites vorbestimmtes Gefälle ($p_2$) zu vergleichen, wobei die Ausgangsbedingung dann erfüllt ist, wenn der genannte Momentanwert des Gefälles kleiner ist als das genannte vorbestimmte zweite Gefälle.

14. Verfahren nach einem der Ansprüche 1 bis 13, **dadurch gekennzeichnet, dass** die genannte wenigstens eine Ausgangsbedingung darin besteht, eine Momentangeschwindigkeit ($V_c$), berechnet anhand der von dem genannten wenigstens einen Radgeschwindigkeitssensor (5) durchgeführten Messungen, mit Bezug auf eine hohe Geschwindigkeitsschwelle ($V_2$) zu vergleichen, wobei die genannte Ausgangsbedingung dann erfüllt ist, wenn die genannte Momentangeschwindigkeit höher ist als eine hohe Geschwindigkeitsschwelle.

15. Verfahren nach Anspruch 4, **dadurch gekennzeichnet, dass** die genannten aufeinander folgenden Iterationen der genannten Hauptschleife (100) die folgenden Schritte beinhalten:

   • Ermitteln (156) des genannten theoretischen Bremsmoments ($\Gamma_{th}$), damit das Fahrzeug eine gewünschte Geschwindigkeit ($V_0$) erreicht;
   • Korrigieren (162) des Wertes des genannten theoretischen Bremsmoments in Abhängigkeit von der genannten Geschwindigkeitsabweichung, um das genannte Sollbremsmoment ($\Gamma_c$) zu erreichen.

16. Verfahren nach einem der Ansprüche 1 bis 15, **dadurch gekennzeichnet, dass** das genannte Fahrzeug einen Beschleunigungsmesser (19) zum Messen einer Längsbeschleunigung der Karosserie des genannten Fahrzeugs als gemessene Längsbeschleunigung ($A_m$) umfasst, wobei der genannte Momentanwert des Gefälles ermittelt wird durch:

   • Berechnen einer momentanen Längsbeschleunigung ($A_c$) auf der Basis von von dem genannten wenigstens einen Radgeschwindigkeitssensor durchgeführten Radgeschwindigkeitsmessungen;
   • Ermitteln eines Gefälles (p) durch Vergleichen der genannten momentanen Längsbeschleunigung mit der genannten von dem genannten Beschleunigungsmesser gemessenen Längsbeschleunigung.

17. Programmierbare Recheneinheit (11) mit einem Prozessor und wenigstens einem Speicher (100), wobei der genannte Speicher Befehlscodes eines Programms zum Assistieren beim Fahren eines Fahrzeugs auf einem Gefälle umfasst, **dadurch gekennzeichnet, dass** das genannte Fahrhilfeprogramm ein Verfahren zum Assistieren beim Fahren nach einem der Ansprüche 1 bis 16 ausführt.

18. Vorrichtung zum Assistieren beim Fahren eines Fahrzeugs auf einem Gefälle, die Folgendes umfasst:

   - ein Bremssystem, das von der Betätigung eines Bremspedals durch den Fahrer abgekoppelt ist;
   - wenigstens einen Radgeschwindigkeitssensor (5) zum Messen der Momentangeschwindigkeit eines Rades des genannten Fahrzeugs;
   - einen Beschleunigungsmesser (19) zum Messen einer Längsbeschleunigung der Karosserie des genannten Fahrzeugs als gemessene Längsbeschleunigung ($A_m$);
   - eine programmierbare Recheneinheit (11);

   **dadurch gekennzeichnet, dass** die genannte programmierbare Recheneinheit eine Recheneinheit nach Anspruch 17 ist.

FIG.1

FIG.2

DEBUT

51

N ← TEST 1
p > p₁ ? ← P

Y

52

N ← TEST 2
V_c < V₁ ? ← V_c

Y

53

N ← TEST 3 ← ⑮
⑯
⑰

Y

i := 0

i := i + 1

153

⑰ — d → TEST
d₁ < d < d₂ ? → N

Y

154 — V_{0i} := V_{0i-1} + ΔV_0      P → [152]

151

V_0

100

FIG. 3a

FIG. 3 b

FIG.4

FIG.5

23

DEBUT

251 — TEST 1
$p > p_1$ ? ← P
N ← → Y

252 — TEST 2
$V_c < V_1$ ? ← $V_c$
N ← → Y

253 — TEST 3 ← (15)
← (16)
N ← → (17)
Y

P → $S_0 := f(p)$ — 260

$\Gamma_c$ — 261

$i := 0$

$i := i+1$

P → ☐ — 352 — 351

(18) → ☐ — 380

$V_0$

300

FIG. 6a

FIG.6b

## RÉFÉRENCES CITÉES DANS LA DESCRIPTION

**Documents brevets cités dans la description**

- US 5941614 A

- WO 0114185 A1